# DEMANDE DE BREVET EUROPEEN

(11) **EP 4 782 781 A1**
(43) Date de publication de la demande: **29.07.2026**
(21) Numéro de dépôt: 26152706.3
(22) Date de dépôt: 19.01.2026
(51) Int. Cl.: F28F 7/02, B33Y 80/00

(54) **MODULE D ' ÉCHANGEUR DE CHALEUR A PLAQUES ET A AILETTES SOUS LA FORME D'UNE STRUCTURE D ' ÉCHANGE THERMIQUE DE SURFACE MINIMALE TRIPLEMENT PÉRIODIQUE (TPMS) A MOTIFS ÉLÉMENTAIRES SCHWARTZ P**

(30) Priorité: 22.01.2025 FR 2500654
(71) Demandeur: Commissariat à l'Energie Atomique et aux Energies Alternatives, 75015 Paris (FR)
(72) Inventeur: COSTE, Pierre, 38054 GRENOBLE CEDEX 09 (FR)
(74) Mandataire: Ipsilon

(57) **Abrégé**

Module d'échangeur de chaleur à plaques et à ailettes sous la forme d'une structure d'échange thermique de surface minimale triplement périodique (TPMS) à motifs élémentaires Schwartz P.

L'invention concerne un module (1) d'échangeur de chaleur à un ou deux circuits de fluide, de type à plaques et à ailettes s'étendant selon un axe longitudinal (X) et comprenant :
- deux plaques planes (11, 12) s'étendant selon l'axe longitudinal;
- des ailettes sous la forme d'une structure (10) d'échange thermique de surface minimale triplement périodique (TPMS) à motifs élémentaires Schwartz-P (13), agencé(s) entre les deux plaques et délimitant un ou deux circuits de fluide, chacun des motifs Schwartz-P comprenant au moins un trou débouchant dans l'axe longitudinal (X) perpendiculaire au plan transversal (Y, Z ).

## Description

### Domaine technique

La présente invention concerne les modules d'échangeurs de chaleur à un ou deux circuits de fluide.

L'invention vise plus particulièrement à obtenir de tels modules d'échangeurs avec des performances thermiques qui sont significativement performantes par rapport à l'état de l'art tout en gardant des pertes de charge admissibles, voire réduites.

Les échangeurs de chaleur connus comprennent soit un, soit au moins deux circuits à canaux de circulation interne de fluide. Dans les échangeurs à au moins deux circuits de fluide, les échanges thermiques se réalisent entre les deux circuits de fluide.

Un module d'échangeur de chaleur selon l'invention peut aussi être mis en œuvre dans toute autre application nécessitant un échange entre deux fluides, tels qu'un liquide et un gaz, ou deux liquides ou encore deux gaz, en particulier lorsque des variations de température rapides et/ou de grande amplitude sont en jeu.

Par « fluide primaire », on entend dans le cadre de l'invention, le sens usuel en thermique, à savoir le fluide chaud qui transfère sa chaleur au fluide secondaire qui est le fluide froid.

A contrario, par « fluide secondaire », on entend dans le cadre de l'invention le sens usuel en thermique, à savoir le fluide froid auquel est transféré la chaleur du fluide primaire.

Les applications de l'invention sont nombreuses parmi lesquelles on peut citer:
- l'aéronautique, où les contraintes sont importantes en termes d'intensité des échanges thermiques, c'est-à-dire de puissance à évacuer en un minimum de masse et de volume, et de pertes de charge ;
- les transports maritimes où de telles contraintes sont également connues.

Plus généralement, un module d'échangeur de chaleur selon l'invention peut être envisagé à tous les domaines où les structures TPMS sont utilisées ou envisagées comme ailettes pour les échanges thermiques.

### Technique antérieure

Les échangeurs de chaleur, dits à plaques, existants, présentent des avantages importants par rapport aux échangeurs de chaleur, dits à tubes, existants, en particulier du point de vue de leurs performances thermiques et de leur compacité grâce à un rapport de la surface sur le volume d'échange thermique favorablement élevé. Cela étant, les échangeurs à plaques présentent généralement de petits diamètres de canaux, ce qui risque de poser problème au cours de leur exploitation, exposés à un milieu corrosif et aux produits de fissions, pouvant à terme boucher ou détériorer de si petites sections de passage des canaux, ce qui est prohibitif.

Les échangeurs à tubes connus sont par exemple des échangeurs à tubes et calandre, dans lesquels un faisceau de tubes droits ou cintrés en forme de U ou en forme d'hélice est fixé sur des plaques percées et disposé à l'intérieur d'une enceinte dénommée calandre. Dans ces échangeurs à tubes et calandre, l'un des fluides circule à l'intérieur des tubes tandis que l'autre fluide circule à l'intérieur de la calandre. Ces échangeurs à tubes et calandre présentent un volume important et sont donc de faible compacité.

Les échangeurs de chaleur à plaques et à ailettes utilisent des plaques et des ailettes plates comme échangeurs de chaleur pour les éléments de transfert de chaleur. Les ailettes sont placées entre les deux plaques de chaque canal d'un circuit de fluide et usuellement soudées des deux côtés. En fonction de la manière dont le fluide s'écoule, les passages de fluide chaud et froid sont empilés, alignés et brasés en une seule pièce, c'est-à-dire en faisceaux. Les ailettes couramment utilisées sont disponibles sous forme de droites, poreuses, dentelées, ondulées, avec des formes interrompues et décalées (OSF pour « Offset Strip Fins »).

La demande de brevet US2023/0023640A1 propose un échangeur de chaleur de type à plaques et à ailettes où ces dernières sont agencées sur un côté de l'échangeur, typiquement le côté où circule de l'air, oscillantes et peuvent être périodiques. Cette forme est dite optimisée mais les paramètres et la méthode d'optimisation ne sont pas explicités. Les objectifs de l'optimisation sont soit de maximiser l'échange de chaleur, soit de minimiser la perte de charge, soit de minimiser l'encombrement et la masse. Cette solution d'échangeur de chaleur ne propose pas réellement une augmentation des échanges sans dégrader la perte de charge.

Récemment, des échangeurs de chaleur à zone d'échange thermique basée sur des surfaces minimales triplement périodiques (« TPMS ») ont été envisagés. Les structures TPMS sont constituées de deux domaines de volume de fluide interpénétrés séparés par une fine paroi. Des exemples de structures unitaires triplement périodiques TPMS comprennent des structures basées sur des motifs élémentaires comme Schwarz-D, Schoen-G, Schwarz-P et Schoen IWP connus.

Les structures TPMS présentent une amélioration du transfert de chaleur et du transfert de masse en raison de la rotation continue des chemins d'écoulement et des grandes zones d'interface. Jusqu'à récemment, les structures TPMS étaient largement théoriques, mais avec les progrès de la technologie de fabrication additive, la réalisation d'échangeurs à structures TPMS est étudiée pour un usage industriel.

Néanmoins des limitations à cette utilisation demeurent dans certaines applications, notamment des pertes de charge excessives ou un mélange non optimal des fluides caloporteurs dans les cas où les structures TPMS sont utilisées pour une fonction d'ailettes.

Le brevet US11389765B2 propose un échangeur de chaleur dont la structure d'échange TPMS présente des motifs élémentaires dont la taille de maille est modifiée progressivement sur la longueur de sorte que la structure est non uniforme entre l'entrée et la sortie. L'objectif initial de ce brevet est de transformer une géométrie de structure TPMS pour l'utiliser au sein de réacteurs, avec comme paramètre principal une épaisseur de paroi variable selon au moins un axe de la structure. Cette solution est donc plus adaptée pour des réacteurs que pour des échangeurs de chaleur, avec des paramètres d'ajustement comme l'aire interfaciale. La solution proposée ne se focalise pas vraiment sur l'amélioration des échanges thermiques sans dégrader la perte de charge.

La demande de brevet WO2020/186829A1 présente des structures TPMS de type P avec trous de type Schwartz. L'application principale visée est l'ingénierie des tissus et matériaux à microstructures. Les objectifs que se fixe cette demande sont caractéristiques de la mécanique des solides, à savoir une amélioration du module de Young et du module d'élasticité isostatique. Ainsi, la solution proposée permet un gain en masse et une optimisation des propriétés intrinsèques d'une structure solide. Cette demande ne s'intéresse pas vraiment à une application d'échange de chaleur car aucune notion d'écoulement de fluide autour de la structure TPMS n'est abordée.

Il existe donc un besoin d'améliorer encore les modules d'échangeurs de chaleur à deux circuits de fluide, de type à plaques et à ailettes notamment ceux à structure TPMS pour les ailettes, afin d'améliorer les échanges thermiques tout en ayant un minimum de pertes de charge.

Le but de l'invention est de répondre au moins partiellement à ce besoin.

### Exposé de l'invention

Pour ce faire, l'invention a pour objet un module d'échangeur de chaleur à un ou deux circuits de fluide, s'étendant selon un axe longitudinal (X) et comprenant :
- deux plaques planes s'étendant selon l'axe longitudinal;
- des ailettes sous la forme d'une structure d'échange thermique de surface minimale triplement périodique (TPMS) à motifs élémentaires Schwartz-P, agencé(s) entre les deux plaques et délimitant un ou deux circuits de fluide, chacun des motifs Schwartz-P comprenant au moins un trou débouchant dans l'axe longitudinal (X) perpendiculaire au plan transversal (Y, Z ).

Selon un mode de réalisation avantageux, le trou est débouchant selon un axe transversal (Z) ou (Y) selon un autre axe transversal (Y) ou dans une direction quelconque au sein d'un motif élémentaire et/ou entre deux motif élémentaires.

Selon une configuration avantageuse, la structure TPMS est agencée sur l'un et/ou l'autre côté longitudinal du module.

Selon une variante de réalisation avantageuse, chaque trou débouchant selon l'axe transversal (Y, Z) est de forme demi-circulaire, circulaire, demi-elliptique, elliptique ou quelconque.

Avantageusement, le nombre n de motifs élémentaires Schwartz-P agencé(s) entre les deux plaques est supérieur ou égal à un.

Selon un autre mode de réalisation avantageux, la structure TPMS est orientée de sorte que les interfaces des motifs élémentaires Schwartz-P à la périphérie de la structure soient alignées avec les bords longitudinaux des plaques.

Selon une variante avantageuse, la structure TPMS est allongée d'un facteur d'allongement Fx supérieur à 1 selon au moins l'axe longitudinal X où les motifs élémentaires Schwartz-P sont à maille identique sur la longueur des plaques.

L'invention concerne également un échangeur de chaleur, comprenant une pluralité de modules d'échangeurs de chaleur tels que décrits précédemment, reliés par liaison fluidique entre eux ou non.

L'invention concerne également l'utilisation de l'échangeur de chaleur tel que décrit précédemment, le fluide du premier circuit, en tant que fluide primaire, étant un liquide et le fluide du deuxième circuit, en tant que fluide secondaire, étant un gaz.

L'invention est essentiellement un module d'échangeur de chaleur à deux circuits de fluide à plaques et à ailettes à structure d'échange thermique à structure TPMS à motifs élémentaires Schwartz-P, chacun des motifs comprenant au moins un trou débouchant transversalement à l'écoulement d'un des deux fluides.

Comme corroboré par des calculs de mécanique des fluides numérique (CFD pour « Computational Fluid Dynamics ») l'invention permet d'améliorer les performances thermiques comparativement aux modules d'échangeur selon l'état de l'art, en augmentant significativement le transfert thermique tout en diminuant la perte de charge au sein du module.

En effet, les ailettes TPMS à motifs élémentaires de type Schwartz-P permettent d'intensifier l'échange de chaleur autour des ailettes mais augmentent la perte de charge par rapport à des ailettes droites. entre les zones les plus froides et les plus chaudes du fluide du circuit considéré. En réalisant des trous débouchant des motifs élémentaires dans les zones de fort gradient thermique, le fluide, s'écoule, dans le cas du circuit du fluide chaud (resp. froid) de l'échangeur, du côté naturellement plus chaud (resp. froid) de la paroi des ailettes TPMS vers celui naturellement plus froid (resp. chaud), ce qui améliore l'échange thermique. Et en facilitant l'écoulement axial, ils diminuent la perte de charge. La forme et la taille de ces trous peuvent faire l'objet de calculs d'optimisation par CFD.

Un module d'échangeur peut fonctionner en circulation à courant croisé.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1A], [Fig 1B], [Fig 1C] les figures 1A, 1B et 1C sont des vues respectivement de côté et de perspective d'un module d'échangeur de chaleur selon un mode de réalisation de l'invention à deux plaques planes et ailettes à structure TPMS à motifs élémentaires Schwartz-P allongée d'un facteur d'allongement Fx supérieur à 1 obtenue à l'aide d'un logiciel d'ingénierie.
[Fig 2A], [Fig 2B], [Fig 2C] les figures 2A, 2B et 2C sont des vues illustrant des variantes de réalisation des motifs Schwartz-P à trous elliptiques respectivement supplémentaires et agrandis dans les zones de fort gradient thermique.
[Fig 3A], [Fig 3B] les figures 3A et 3B illustrent en vue de côté et en perspective un module d'échangeur selon l'invention obtenu à l'aide d'un logiciel d'ingénierie avec une géométrie d'un nombre de sept motifs de type Schwartz P allongé dans le sens de l'écoulement (direction X), avec prolongement de l'écoulement rectiligne en sortie pour stabiliser la sortie du fluide.
[Fig 4] la figure 4 reprend le module selon les figures 3A et 3B et illustre le maillage utilisé pour une simulation par calculs numériques CFD.
[Fig 5] la figure 5 illustre le résultat de la simulation numérique CFD réalisé sur le module maillé selon la figure 4.
[Fig 6A], [Fig 6B], [Fig 6C], [Fig 6D], [Fig 6E] les figures 6A à 6E sont des vues illustrant des variantes de positionnement des trous débouchant des motifs Schwartz-P relativement à des points d'arrêt de l'écoulement fluidique.
[Fig 7A], [Fig 7B], [Fig 7C], [Fig 7D] les figures 7A à 7D sont des vues illustrant des variantes d'allongement des motifs Schwartz-P entre les deux plaques.
[Fig 8A], [Fig 8B] les figures 8A et 8B sont des vues illustrant des variantes de positionnement des motifs Schwartz-P entre les deux plaques.

### Description détaillée

On précise que les différents éléments selon l'invention sont représentés uniquement par souci de clarté et qu'ils ne sont pas nécessairement à l'échelle.

Dans les différentes figures, les croix en tant que symboles sont utilisées pour désigner l'emplacement avantageux des trous débouchant selon l'invention.

Les inventeurs ont cherché à concevoir des échangeurs de chaleur de type à plaques et ailettes dont les performances thermiques sont améliorées.

Usuellement, dans ce type d'échangeur, des ailettes sont ajoutées de chaque côté longitudinal de l'échangeur pour améliorer la compacité de l'échangeur. Traditionnellement, les ailettes peuvent prendre par exemple des formes interrompues et décalées (OSF pour « Offset Strip Fins »), perforées ou ondulées.

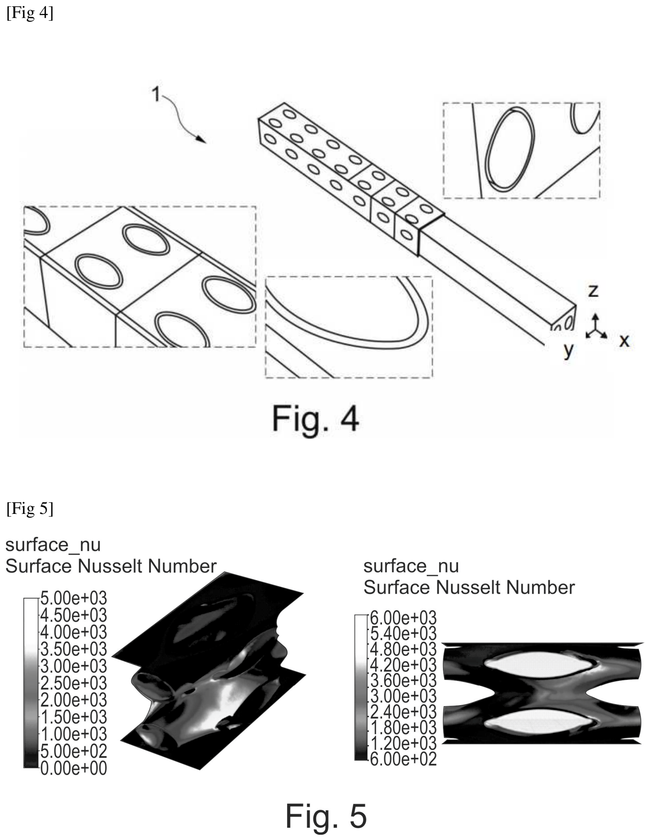

Pour intensifier l'échange, les inventeurs proposent de réaliser un module d'échangeur de chaleur 1 à ailettes sous la forme d'une structure 100 dite TPMS (acronyme anglo-saxon « Triple Periodic Minimal Surface ») à motifs élémentaires de type Schwartz P. L'exemple 1 est constitué de 7 motifs en x et 1 en y : il s'agit de la géométrie du calcul présenté qui a pour but l'étude du motif élémentaire figure 5. Généralement, pour l'échangeur réel, le nombre de motifs en x et le nombre en y sont avantageusement plus grands.

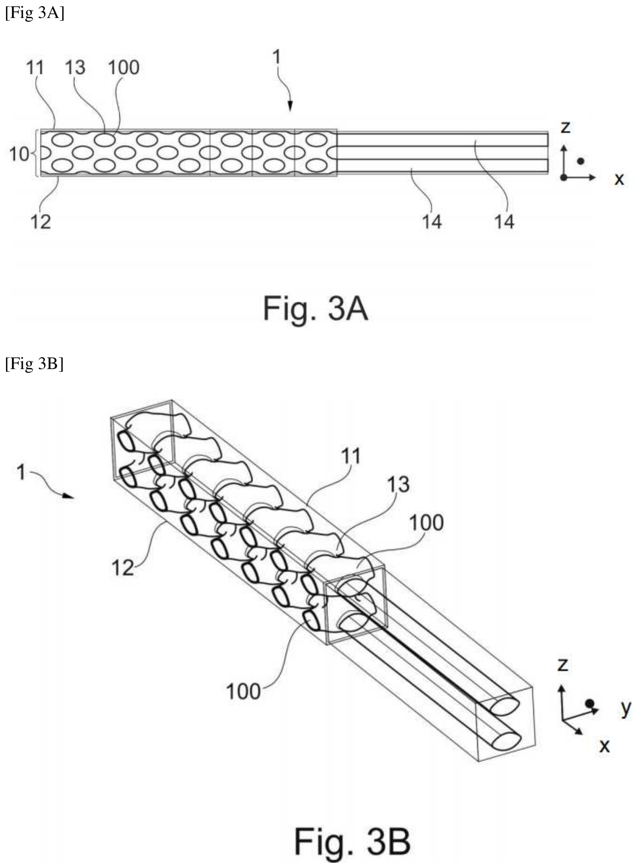

Les inventeurs proposent ainsi un module d'échangeur de chaleur 1 qui s'étend selon un axe longitudinal X, tel qu'illustré aux figures 3A et 3B.

Ce module 1 comprend deux plaques planes 11, 12 de part et d'autre une structure 100 TPMS à motifs élémentaires 13 de type Schwartz P.

Au sein de ce module d'échangeur 1, la circulation des deux fluides peut être à courant croisé.

La structure 10 obtenue par réplication sur la longueur de motifs élémentaires de type Schwartz-P selon la direction longitudinale X qui constitue l'axe principal d'écoulement du fluide de travail.

La structure TPMS 10 est allongée d'un facteur Fx supérieur à 1 le long de la direction X. La section de passage de l'écoulement varie en fonction du facteur d'allongement Fx mais elle reste constante tout le long de l'échangeur. Ainsi, l'épaisseur de la paroi solide, c'est-à-dire l'épaisseur des ailettes est maintenue constante dans la structure 10.

Chacun des motifs élémentaires 13 de type Schwartz-P comprend au moins un trou débouchant 100 et qui s'étend transversalement à la direction X, soit selon la direction Y et/ou Y.

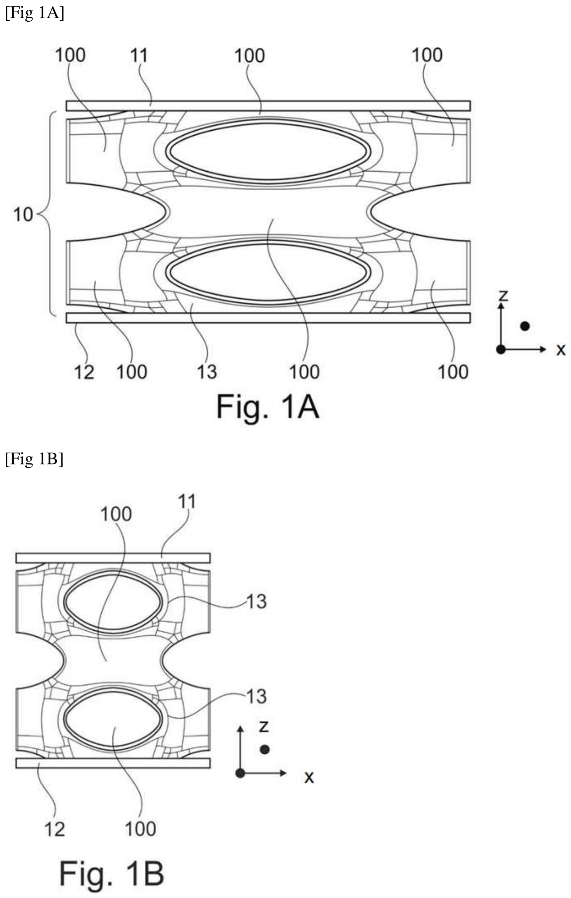

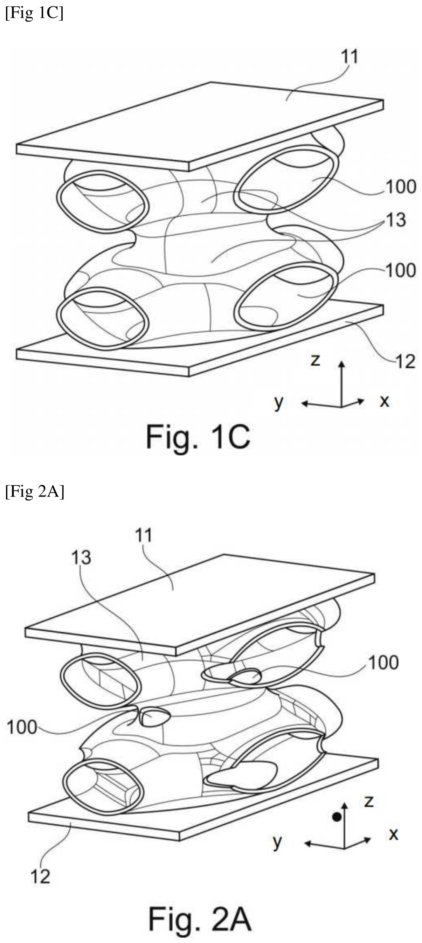

Dans la recherche de meilleurs échanges thermiques avec des pertes charge diminuées, la forme TPMS à motifs Schwartz P a été allongée dans le sens de l'écoulement X jusqu'à une valeur optimale, comme illustrée aux figures 1A à 1C.

Dans l'exemple illustré, la structure TPMS 10 comprend sept motifs élémentaires de type Schwartz-D selon la direction X, qui peuvent être sur un étage ou superposés selon un nombre égal à deux ou plus entre les deux plaques 11, 12.

Un motif élémentaire 13 de type Schwartz-P est illustré aux figures 1A à 1C.

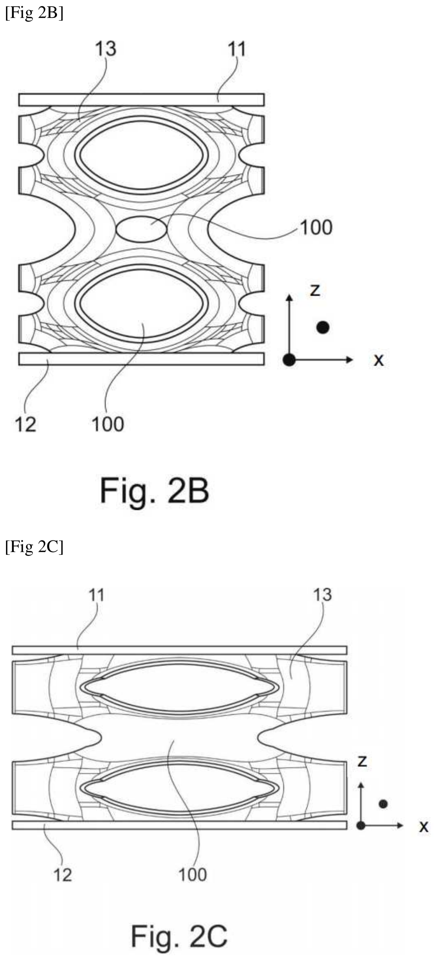

Comme illustré aux figures 2A à 2C, pour tirer tout le profit de la forme allongée de la structure 10, des trous 100, 101 de forme elliptique sont faits dans les zones de fort gradient thermique et dans l'axe de l'écoulement. Ainsi, ces trous 100, 101 permettent un meilleur échange thermique entre les zones les plus chaudes du fluide et les zones les plus froides (côté chaud de l'échangeur, si les ailettes sont du côté froid de l'échangeur c'est l'inverse) de part et d'autre d'une ailette 13. En facilitant l'écoulement axial, ils diminuent également la perte de charge.

Les inventeurs ont réalisé des calculs numériques CFD pour les modules 1 tels que montré aux figures 3A et 3B pour trouver un design optimal qui permet d'améliorer la performance thermique en augmentant significativement le transfert thermique tout en diminuant la perte de charge.

Le transfert thermique peut être caractérisé par le nombre adimensionnel j appelé coefficient de Colburn.

La perte de charge peut être caractérisée par le nombre adimensionnel f appelé coefficient de Fanning (frottement).

Une optimisation des rapports j/f et j³/f conduit à un échangeur plus compact avec une surface d'échange améliorée.

Pour réaliser ces calculs, les inventeurs ont donné en entrée à un logiciel commercial de simulation de fluide, dénommé ANSYS FLUENT, la géométrie du module selon les figures 3A et 3B, avec sept motifs élémentaires de type Schwartz-P. Dans cette géométrie, il y a un prolongement de l'écoulement rectiligne en sortie par les canaux simulés 14 pour stabiliser la sortie du fluide.

Par le jeu des conditions aux limites de symétries latérales, c'est-à-dire les faces latérales parallèles au plan (X et Z), cette géométrie est représentative d'un échangeur à plaques.

L'écoulement simulé dans un canal 14 est à un nombre de Reynolds de 3500 à 4000.

Le fluide froid de l'échangeur entre par la gauche et sort par la droite sur la Figure 3A, selon l'axe X et traverse les motifs élémentaires 13.

L'écoulement du fluide chaud de l'échangeur, qui est de l'autre côté du module d'échangeur 1 est simplement modélisé par un coefficient d'échange par convection et une température moyenne du fluide chaud.

Le sixième motif élémentaire 13 rencontré par le fluide est choisi pour calculer les performances j et f, suffisamment éloigné de l'entrée pour que le régime soit établi et un motif avant la partie rectiligne pour qu'il n'y ait pas d'effet d'influence de la sortie.

La structure globale du module d'échangeur contient des nombres de lignes qui se répètent le long de la direction X.

La géométrie est maillée avec un maillage d'environ 2 millions de mailles, avec une qualité minimale orthogonale de 0,14 et un raffinement aux parois permettant des valeurs de y+ inférieures à 0,9, comme illustré à la figure 4.

Le modèle de turbulence choisi est le K - ω SST sans loi de paroi. Une telle approche avec de telles valeurs de y+ a été validée expérimentalement sur des ailettes OSF avec des valeurs de diamètres hydrauliques et de nombres de Reynolds comparables.

Dans la simulation, la paroi solide est chaude et le fluide froid de l'échangeur circule à l'intérieur d'un motif 13 et à l'extérieur.

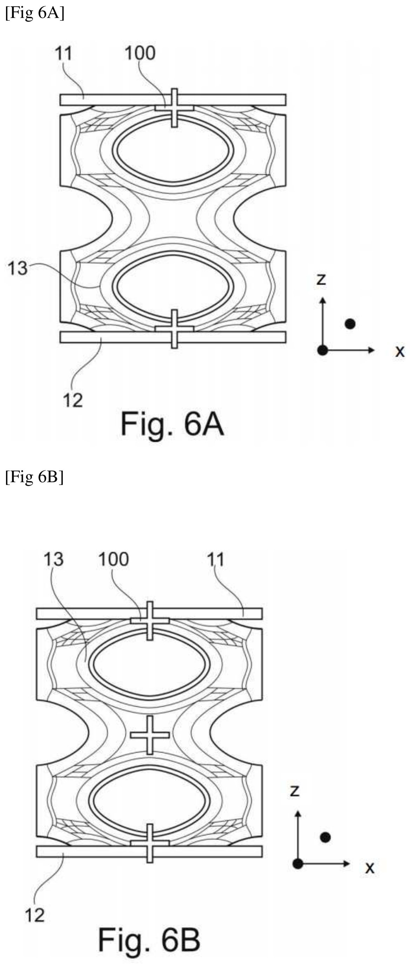

A l'emplacement des croix des figures 6A à 6E, le fluide froid impacte la paroi chaude perpendiculairement : l'échange thermique y est donc maximal, la température de la paroi est donc froide.

De l'autre côté au contraire, il y a un point d'arrêt, l'échange y est donc minimal, la température de la paroi est donc chaude.

Un trou débouchant 100 est donc réalisé dans cette zone pour favoriser l'échange thermique, qui plus est dans l'axe X de l'écoulement ce qui contribue à baisser la perte de charge.

L'emplacement du trou débouchant 100 selon l'axe de l'écoulement X, comme montré sur les figures 2A et 2B est optimal pour à la fois favoriser l'échange thermique et baisser la perte de charge.

Le tableau 1 ci-dessous montre l'effet de trou et de sa forme circulaire ou elliptique.

**[Tableau 1]**

| Type de structure TPMS 10 à motifs Schwartz-P | Sans trou | Avec trous débouchant de forme circulaire | Avec trous débouchant de forme elliptique circulaire |
|---|---|---|---|
| Facteur de Colburn j *10⁻ | 1,19 | 1,38 | 1,19 |
| Facteur de Fanning f * 10⁻¹ | 2,66 | 2,42 | 2,06 |
| Rapport j/f * 10⁻² | 4,49 | 5,68 | 5,78 |
| Rapport j³/f *10⁻⁵ | 0,637 | 1,08 | 0,81 |

Il ressort de ce tableau 1 que quelle que soit sa géométrie, un trou débouchant 100 génère une baisse du frottement et une augmentation de l'échange de chaleur. Selon les applications, on peut rechercher un meilleur f (gain de 23% avec trou elliptique), un meilleur j (gain de 16% avec trou circulaire), un meilleur j/f (gain de 29% avec trou elliptique) ou un meilleur j³/f (gain de 69% avec trou circulaire). Ce dernier critère est le plus important dans le cas assez commun où l'objectif est de minimiser la masse ou le volume de l'échangeur.

Selon les cas d'application, il peut être intéressant de considérer les variantes ou options suivantes.

Elles se classent en trois grandes familles : taille et forme des trous, position des trous, variations de géométrie et de positionnement de la TPMS entre les deux plaques.

La taille ou la forme des trous sont des paramètres géométriques qui peuvent être optimisés.

Les figures 6A à 6E illustrent différentes variantes de positionnement du centre des trous 100 soit à la jonction entre les ailettes TPMS et les plaques 11, 12 délimitant les côtés chaud et froid de l'échangeur, soit au cœur de l'écoulement.

Une forme circulaire ou demi-circulaire comme illustrée à la figure 6A a pour avantage que seul le diamètre du trou est à optimiser.

Une forme elliptique ou demi-elliptique comme illustrée aux figures 6B à 6E a pour avantage de s'adapter à une forme allongée de gradient thermique de part et d'autre de la paroi des ailettes TPMS.

Enfin un trou peut avoir une forme quelconque qui peut être déterminée par une méthode du type solveur adjoint. Plus difficile à mettre en œuvre, mais disponible à titre d'exemple dans le solveur ANSYS Fluent, elle présente toutefois l'avantage de s'adapter au plus près à des formes complexes de gradient thermique.

La position des trous va dépendre de la situation et de l'effet recherché.

Les trous 100 selon la figure 6A favorisent l'écoulement du fluide proche des plaques 11, 12.

Les trous 100 selon la figure 6B peuvent permettre d'équilibrer l'écoulement et les gradients thermique entre proche plaque 11, 12 et le cœur de l'écoulement.

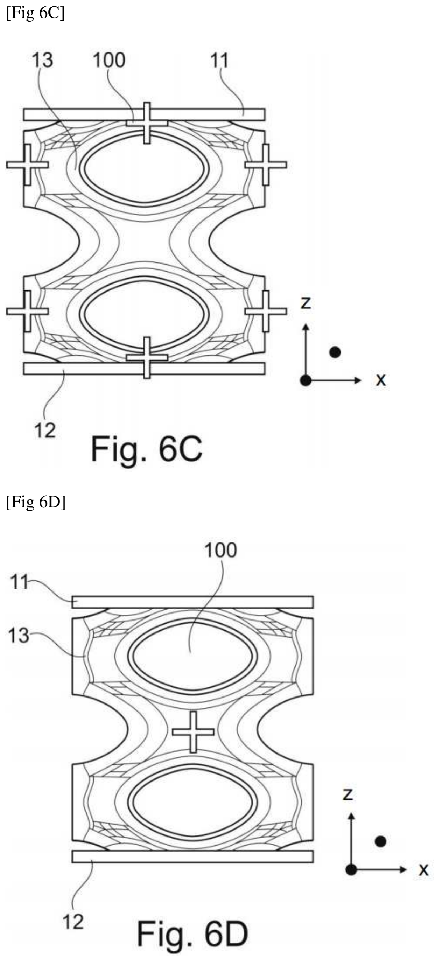

Les trous 100 selon la figure 6C favorisent à la fois l'écoulement du fluide proche des plaques 11, 12 et évitent d'éventuels gradients thermiques dans les zones de point d'arrêt les plus proches des plaques. Par « point d'arrêt », on entend ici le sens classique de la mécanique des fluides, à savoir un point, aussi appelé, point de stagnation, de l'écoulement d'un fluide sur un corps où la vitesse locale des particules du fluide est amenée à zéro du fait des symétries.

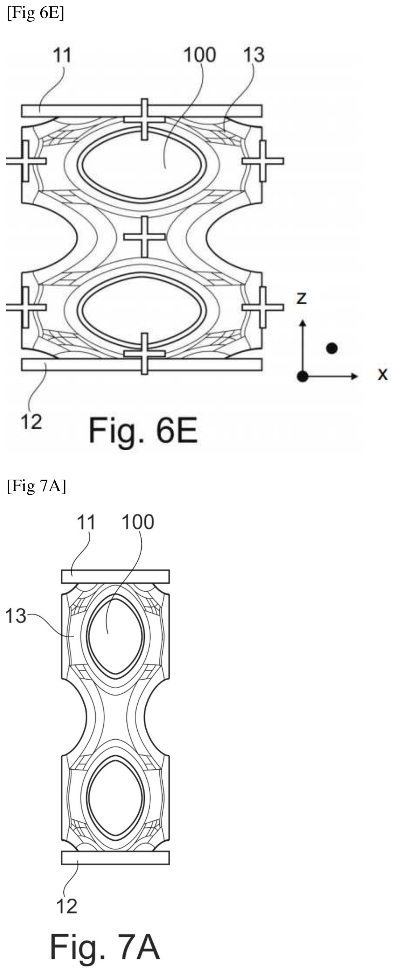

Les trous 100 selon la figure 6D favorisent l'échange de chaleur au cœur de l'écoulement. Les trous 100 selon la figure 6E permettent de contrôler toutes les zones de point d'arrêt.

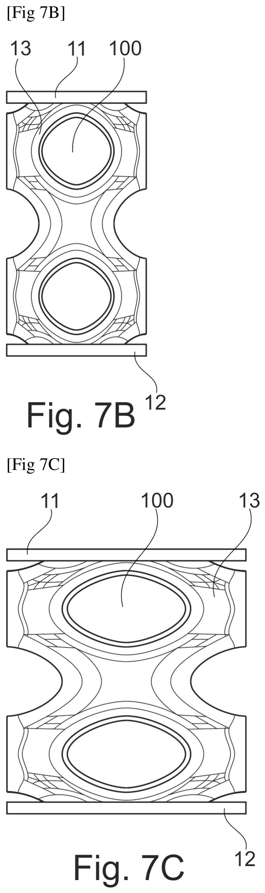

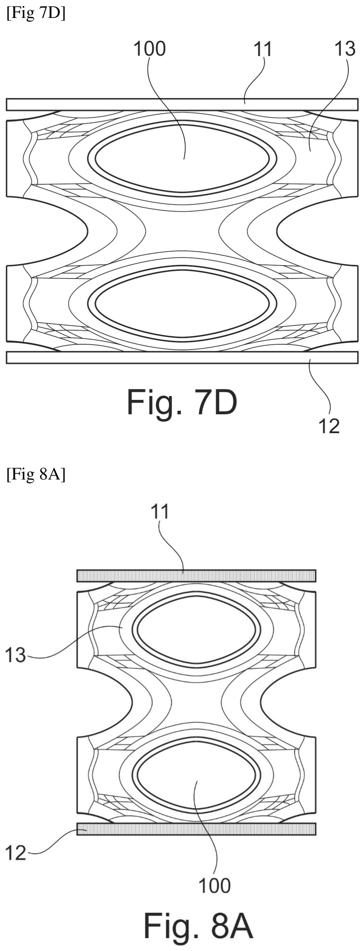

Selon les applications, il peut être intéressant de limiter l'allongement d'une structure TPMS 10 afin d'augmenter l'intensité de l'échange thermique comme montré sur les figures 7A et 7B ou bien d'augmenter l'allongement comme sur les figures 7C et 7D pour faciliter la circulation du fluide et donc diminuer la perte de charge.

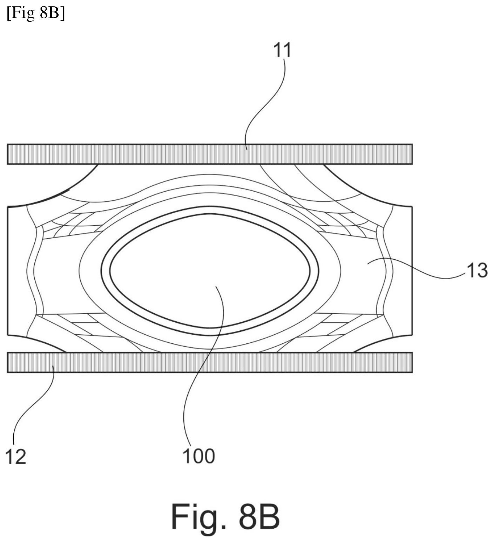

Une autre possibilité est de faire varier le nombre n de motifs élémentaires 13 entre les plaques 11, 12 comme illustré sur les figures 8A et 8B avec respectivement n égal à 2 et n égal à 1. Selon les cas, n peut être un paramètre d'optimisation, dont la valeur optimale peut dépendre entre autres de l'épaisseur de paroi et de l'effet désiré, et bien sûr du nombre de Reynolds de l'écoulement.

D'autres variantes et améliorations peuvent être apportées sans pour autant sortir du cadre de l'invention. Par exemple, selon les cas , il pourrait être judicieux de faire des trous dans des directions Y ou Z ou combinant les trois directions.

## Revendications

1. Module (1) d'échangeur de chaleur à un ou deux circuits de fluide, de type à plaques et à ailettes s'étendant selon un axe longitudinal (X) et comprenant :
- deux plaques planes (11, 12) s'étendant selon l'axe longitudinal;
- des ailettes sous la forme d'une structure (10) d'échange thermique de surface minimale triplement périodique (TPMS) à motifs élémentaires Schwartz-P (13), agencé(s) entre les deux plaques et délimitant un ou deux circuits de fluide, chacun des motifs Schwartz-P comprenant au moins un trou débouchant dans l'axe longitudinal (X) perpendiculaire au plan transversal (Y, Z ).

2. Module (1) d'échangeur de chaleur à un ou deux circuits de fluide selon la revendication 1, le trou débouchant selon un axe transversal (Z) ou (Y) ou dans une direction quelconque au sein d'un motif élémentaire et/ou entre deux motif élémentaires.

3. Module (1) d'échangeur de chaleur à un ou deux circuits de fluide selon la revendication 1 ou 2, la structure TPMS étant agencée sur l'un et/ou l'autre côté longitudinal du module.

4. Module (1) d'échangeur de chaleur à un ou deux circuits de fluide selon l'une des revendications précédentes chaque trou débouchant étant de forme demi-circulaire, circulaire, demi-elliptique, elliptique ou quelconque.

5. Module (1) d'échangeur de chaleur à un ou deux circuits de fluide selon l'une des revendications précédentes, le nombre n de motifs élémentaires Schwartz-P agencé(s) entre les deux plaques, étant supérieur ou égal à un.

6. Module (1) d'échangeur de chaleur à un ou deux circuits de fluide selon l'une des revendications précédentes, la structure TPMS étant orientée de sorte que les interfaces des motifs élémentaires Schwartz-P à la périphérie de la structure soient alignées avec les bords longitudinaux des plaques.

7. Module (1) d'échangeur de chaleur à un ou deux circuits de fluide selon l'une des revendications précédentes, la structure TPMS étant allongée d'un facteur d'allongement Fx supérieur à 1 selon au moins l'axe longitudinal X, les motifs élémentaires Schwartz-P étant à maille identique sur la longueur des plaques.

8. Echangeur de chaleur, comprenant une pluralité de modules d'échangeur (1) de chaleur selon l'une des revendications précédentes, reliés par une liaison fluidique entre eux ou non.

9. Utilisation de l'échangeur de chaleur selon la revendication 8, le fluide du premier circuit, en tant que fluide primaire étant un liquide et le fluide du deuxième circuit, en tant que fluide secondaire, étant un gaz.
